# EUROPEAN PATENT SPECIFICATION

(11) **EP 3 831 661 B1**
(45) Date of publication and mention of the grant of the patent: **27.05.2026**
(21) Application number: 20208290.5
(22) Date of filing: 18.11.2020
(51) Int. Cl.: F16B 5/06, B60R 13/10, F16B 5/00, F16B 2/22, F16B 5/12

(54) **COUPLING KIT FOR A TAG FOR A LICENSE PLATE HOLDER AND RELATED COUPLING ELEMENT**
KUPPLUNGSSATZ FÜR EIN ANHÄNGESCHILD FÜR EINEN KENNZEICHENHALTER UND EIN VERWANDTES KUPPLUNGSELEMENT
KIT D'ACCOUPLEMENT POUR UNE ÉTIQUETTE POUR UN PORTE-PLAQUE D'IMMATRICULATION ET L'ÉLÉMENT D'ACCOUPLEMENT CONNEXE

(30) Priority: 04.12.2019 IT 201900023001
(43) Date of publication of application: 09.06.2021
(73) Proprietor: GEN-ART SOCIETA' A RESPONSABILITA' LIMITATA, 00173 Rome (IT)
(72) Inventor: Borri, Giuliana, deceased (IT)
(74) Representative: Mulas, Chiara

(56) References cited:
- EP-A1- 0 050 462
- WO-A1-2014/032076
- DE-A1- 2 632 538
- DE-U1- 202018 003 154
- GB-A- 1 002 087
- GB-A- 2 294 146
- US-A- 3 208 119

## Description

The present invention relates to a kit comprising a coupling element and a tag to be coupled to a license plate holder support.

License plate holder supports on which a separate tag can be coupled are known in the prior art. The tag is a decorative and informative element, useful for printing the information and logo of the car manufacturer or a dealer.

In general therefore, license plate holder supports are sold with the possibility of coupling the above-mentioned tags to them.

License plate holder supports not developed to also support a decorative tag exist in the prior art. Examples of such known licence plate holders are disclosed in prior art documents DE 20 2018 003154 U1, DE 26 32 538 A1, GB 1 002 087 A, and EP 0 050 462 A1.

The aim of this invention is that of developing coupling systems for tags to be applied to license plate holder supports, particularly those without an advertising part.

A further aim is that of obtaining an effective coupling element that is quick to apply.

The object of this invention is a kit for coupling to a license plate holder support a tag, said license plate holder support having at least one portion of rear side edge in relief, said kit comprising a tag comprising at least a portion of the rear side edge in relief,said kit being characterised in further comprising at least one coupling element having at least one elastic "U"-shaped portion suitable for enveloping and coupling said portions of side edge in relief of said tag and of said license plate holder support, when they are arranged side-by-side. According to the invention, said coupling element provides a plurality of inner teeth at one or both inner sides of the inner channel formed by said at least one "U"-shaped portion and at least a flat flap, wherein said at least one flat flap has at least one slot and is arranged on a plane perpendicular to the sides of said "U"-shaped portion. Furthermore according to the invention, sad tag has at least one tooth at said portion opposite to said at least one portion of rear side edge in relief and shaped to fit in said slot of said coupling element.

**In** particular, according to the invention, said coupling element of said kit can comprise two elastic "U"-shaped portions separated by a cavity.

Also according to the invention, said plurality of inner teeth of said coupling element of said kit can be arranged on one or both sides of said cavity.

Preferably, according to the invention, said tag of said kit can provide at least one inner bulge at the inner face of said at least one portion of rear side edge in relief.

**In** particular, according to the invention, said plurality of inner teeth of said of said coupling element is configured in such a way that they can couple to at least one bulge of said tag, during use.

Finally, the kit according to the invention can comprise a license plate holder support with at least one portion of rear side edge in relief.

The invention is now described, by way of example and without limiting the scope of the invention, with reference to the accompanying drawings, in which:
figure 1 shows a front perspective view of a license plate holder support and a tag of the kit according to the invention;
figure 2 shows a rear view of the tag in figure 1;
figure 3 shows a bottom view the tag of figure 1;
figure 4 shows a rear view of an assembly comprising a license plate holder support and a kit according to the invention, comprising a tag and coupling elements according to the invention, in a first coupling configuration;
figure 5 shows a bottom view of the assembly in figure 4;
figure 6 shows a rear view of the assembly in figure 4, in a second coupling configuration;
figure 7 shows a bottom view of the assembly in figure 6;
figure 8 shows a rear perspective view of the assembly in figure 6;
figure 9 shows an exploded perspective view of a detail of the assembly in figure 6;
figure 10 shows a sectional view of the assembly in figure 9, along the section plane X;
figure 11 shows a perspective bottom view of the coupling element of the kit according to the invention;
figure 12 shows a perspective top view of the coupling element in figure 11;
figures 13a to 13d show top, bottom, and side views of the coupling element in figure 11; and
figure 14 shows detail XIV of the coupling element in figure 11.

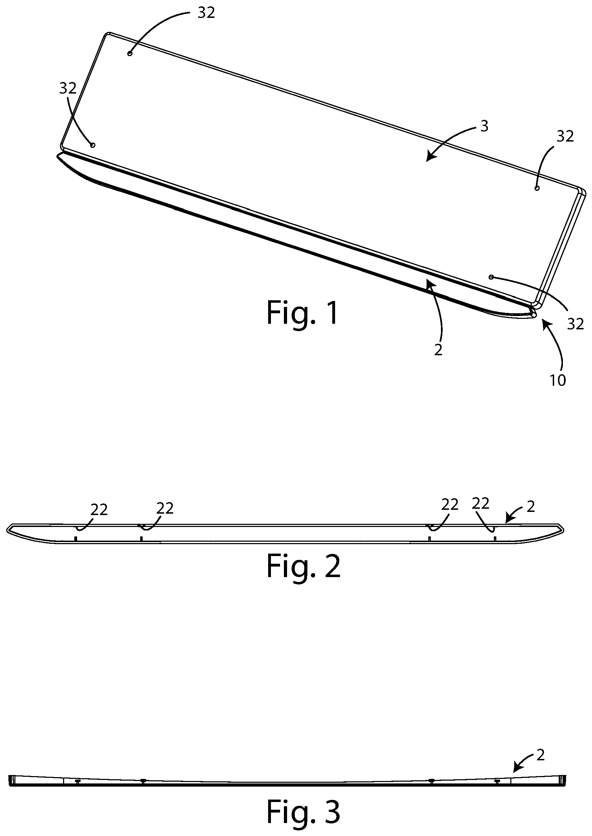

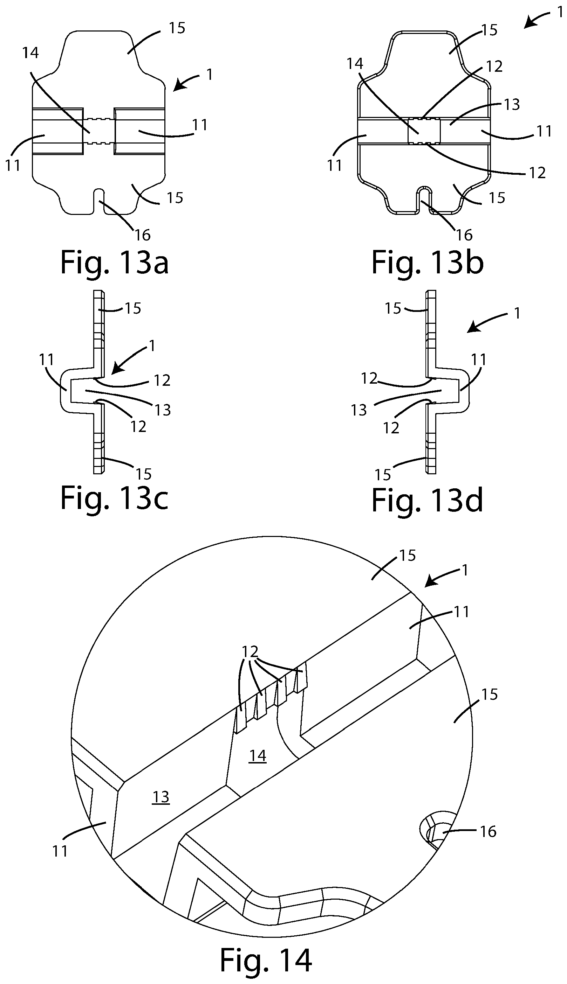

Referring to figures 1 to 14, we can observe a kit for coupling to a license plate holder support a tag, said kit according to the invention being indicated with reference numeral 10.

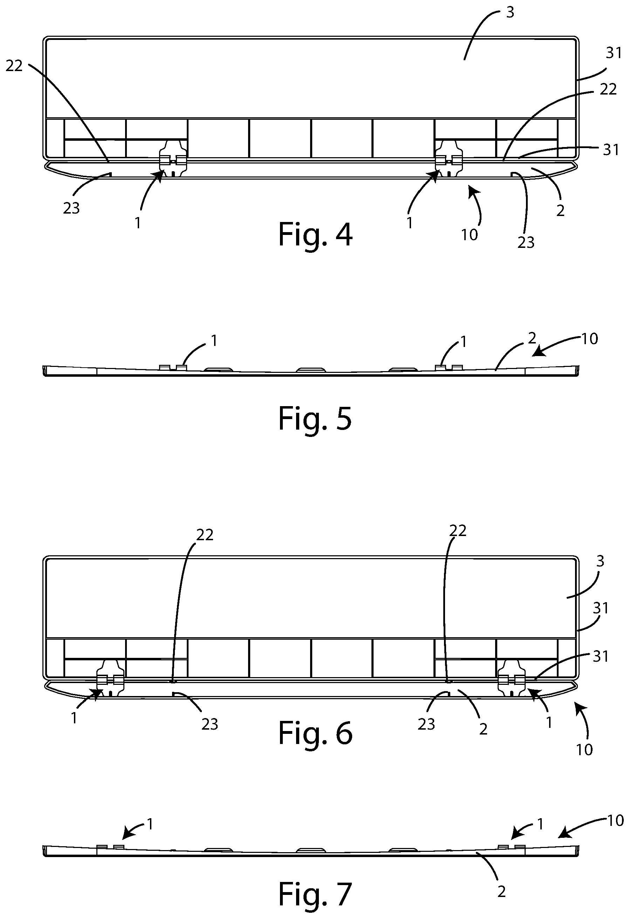

The kit 10 according to the invention is used to couple a tag 2 to a license plate holder support 3, like those shown in figures 1 and 4.

A license plate holder support 3 has a front face (shown from the top in figure 1) on which a license plate (not shown) is arranged and coupled, for example by means of fixing means, such as pins to be inserted into the holes 32 obtained in the front face thereof.

In addition, said license plate holder support 3 has, at the rear face thereof (shown for example, in figure 4), a rear side edge 31 with at least one portion in relief. In the example shown, said license plate holder support 3 has at least one side, more specifically, the whole rear side edge 31, in relief. In particular, it is in relief in a transverse direction to the plane on which said front face on which the license plate is arranged, lies.

The tag 2 of kit 10 according to the invention also comprises a front face (for example, as shown in figure 1) on which advertising or information about the vehicle, the dealer or the car manufacturer can be silk-screen printed or otherwise affixed, and a rear face (as shown for example, in figure 4) which has at least one portion of rear side edge 21 in relief.

In the example shown, said tag 2 has at least one side, more specifically the whole rear side edge 21, in relief. In particular, it is in relief in the direction transverse to the plane on which said front face on which the advertising information is affixed, lies.

In particular, the profile of the rear side edge is shaped to fit the profile of the license plate holder support 3 to which it is placed side-by-side.

As seen in the embodiment shown in the figures, the profile of the side of the side edge 21 to be placed next to the corresponding side of the license plate holder support 3 slopes down towards the centre symmetrically from the two ends.

Moreover, the kit 10 according to the invention comprises at least one coupling element 1 having at least one elastic "U"-shaped portion **11** suitable for enveloping and coupling said portions of side edge 21, 31 in relief of said tag 2 and of said license plate holder support 3 when they are arranged side-by-side.

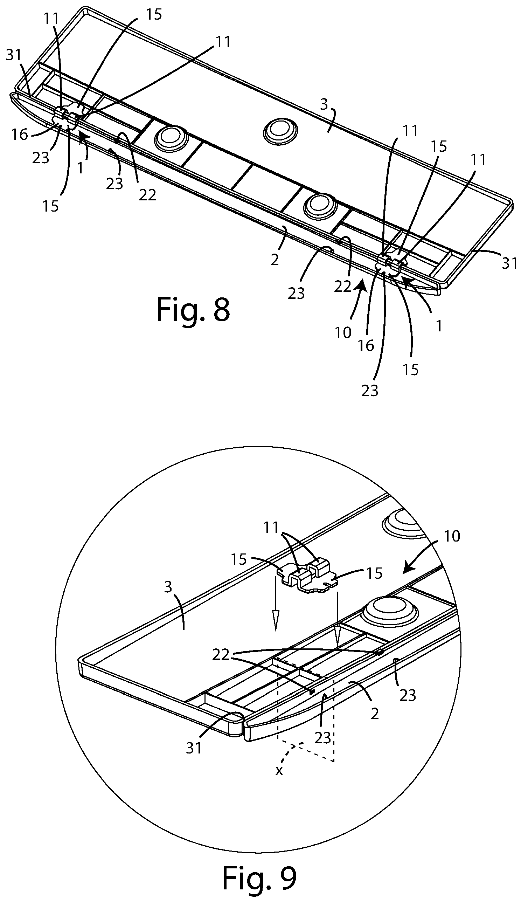

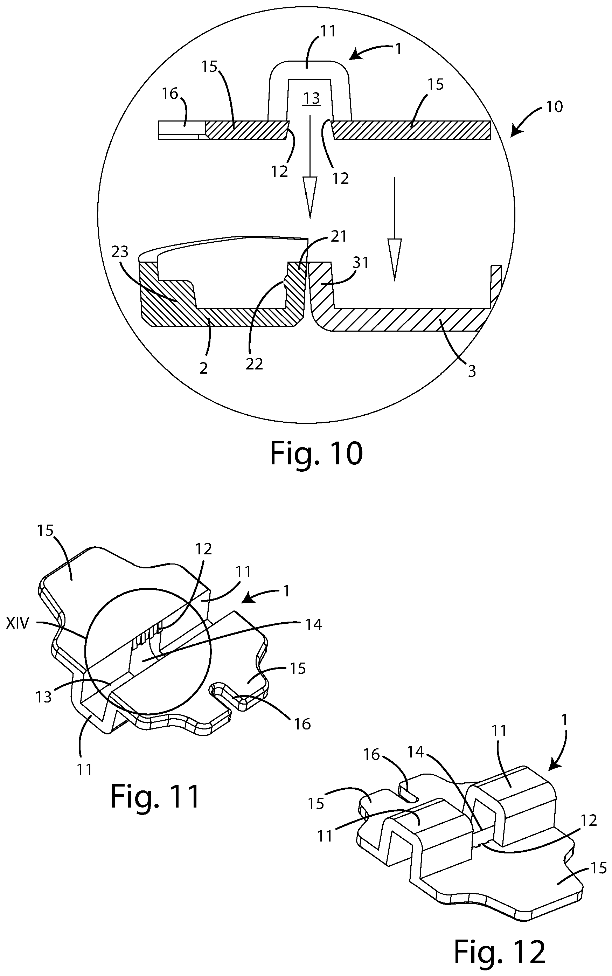

**In** fact, as shown in particular in figures 9 and 10, during use, after having placed one side of the rear side edge 21 of the tag 2 next to one side of the rear side edge 31 of the license plate holder support 3, the coupling element 1 is applied with the concavity of the "U"-shaped portion **11** facing towards said side edges 21 and 31 and couples to them to couple them.

This advantageously allows coupling the tag 2 and the license plate holder support 3 to each other by their rear portion, without intervening on their front portion.

**In** addition, this allows the elements to be coupled together without interfering with the subsequent coupling of the license plate holder support 3 and tag 2 assembly to the vehicle, thus not greatly increasing its rear thickness.

Preferably, said coupling element 1 can be made of plastic material, in particular nylon or similar material.

Again according to the invention, said coupling element 1 can provide a plurality of inner teeth 12 at one or both inner sides of the inner channel 13 formed by said at least one "U"-shaped portion 11.

Said plurality of inner teeth 12 advantageously allows improving the coupling between said coupling element 1 and said side edges 21 and 31.

**In** particular, according to the invention, as better seen for example, in figures 9 and 10, said tag 3 can provide at least one inner bulge 22 at the inner face of said at least one portion of rear side edge 21 in relief.

Such bulge 22 is particularly advantageous to facilitate the coupling of said coupling element 1 to said side edge 21.

Moreover, during use, when said coupling element 1 has said plurality of inner teeth 13, they couple to said at least one bulge 22 of said tag 2, fixing the elements together.

In embodiments not shown, the rear side edge of the license plate holder support can have similar bulges.

Referring in particular to figures 11 to 14, said coupling element 1 can comprise two "U"-shaped elastic portions 11 separated by a cavity 14. Such cavity 14 has no connecting elements between the two sides of the coupling element 1.

This allows having a coupling element 1 suitable for having a greater coupling surface, but with good elastic properties given by the two different "U"-shaped portions 11.

In particular, when said cavity 14 is present, said plurality of inner teeth 12 can be arranged on one or both sides of said cavity 14.

This therefore allows making the most of the elastic properties of the "U"-shaped portions 11, channelling the friction force onto the portion without connecting elements.

In addition, said coupling element 1 can comprise at least one flat flap 15; there are two opposite flaps 15 in the embodiment shown in the drawings. Said at least one flap 15 is arranged on a plane perpendicular to the sides of said "U"-shaped portion 11.

During use, when said coupling element 1 is coupled to said tag 2 and to said license plate holder support 3, said at least one flap 15 is therefore on a plane parallel to the front face of said tag 2 and of said license plate holder support 3.

In addition, it can abut with the rear face thereof.

In particular, such one or two flaps 15 allow giving rigidity to the coupling between tag 2 and license plate holder support 3 by preventing or anyway reducing the reciprocal rotation.

Preferably, said at least one flap 15 of the coupling element 1 can have at least one slot 16.

Furthermore, said tag 2 can have at least one tooth 23 at said portion opposite to said at least one portion of rear side edge 21 in relief and shaped to fit in said slot 16 of said coupling element 1.

This allows preventing, or in any case making the lateral movement between the elements more difficult.

Preferably, said slot 16 and said tooth 23 are arranged along an axis perpendicular to the side 31 of the license plate holder support 3 along which the tag 2 and the license plate holder support 3 are placed side-by-side.

**In** other embodiments not shown, the license plate holder support can have similar teeth.

As shown in the two configurations in figures 4 and 6, two or four pairs of bulges 22 and teeth 23 teeth can be provided in order to apply several coupling elements 1 or to decide where said coupling elements 1 are to be applied according to the type of vehicle or license plate.

The preferred embodiments have been described above and variants to the invention have been suggested, but it shall be understood that the invention may be modified and/or adapted by experts in the field without thereby departing from the scope of the inventive concept, as defined in the claims herein.

## Claims

1. Kit (10) for coupling to a license plate holder support (3) a tag (2), said license plate holder support (3) having at least a portion of its rear side edge (31) in relief, said kit (10) comprising a tag (2) comprising at least a portion of its rear side edge (21) in relief,
said kit (10) being **characterized in** further comprising at least a coupling element (1) having at least an elastic "U" shaped portion (11) suitable for enveloping and coupling said relief side edge portions (21, 31) of said tag (2) and of said license plate holder support (3), when they are arranged side by side,
said coupling element (1) providing a plurality of inner teeth (12) at one or both inner sides of the inner channel (13) formed by said at least one "U" shaped portion (11) and comprising at least a flat flap (15), wherein said at least one flat flap (15) has at least one slot (16) and is arranged on a plane perpendicular to the sides of said "U" shaped portion (11), and
**in that** said tag (2) has at least one tooth (23) in correspondence with the portion opposite to said at least a portion of its rear side edge (21) in relief and
in being shaped to accommodate itself in said slot (16) of said coupling element (1).

2. Kit (10) according to claim 1, wherein said coupling element (1) comprises two elastic "U" shaped portions (11) separated by a cavity (14).

3. Kit (10) according to claim 2, wherein said plurality of inner teeth (12) is arranged on one or both sides of said cavity (14).

4. Kit (10) according to any one of claims 1 - 3, wherein said tag (2) provides at least one inner bulge (22) in correspondence with the inner face of said at least one portion of its rear side edge (21) in relief.

5. Kit (10) according to the preceding claim, wherein said plurality of inner teeth (13) of said coupling element (1) is configured in such a way that, during use, it couples to said at least one bulge (22) of said tag (2).

6. Kit (10) according to any one of the claims 1 - 5, wherein it comprises a license plate holder support (3) having at least a portion of its rear side edge (31) in relief.

## Patentansprüche

1. Bausatz (10) zum Verbinden eines Kennzeichens (2) mit einem Kennzeichenhalterträger (3), wobei der Kennzeichenhalterträger (3) mindestens einen Teil seiner hinteren Seitenkante (31) als Relief aufweist und der Bausatz (10) ein Kennzeichen (2) umfasst, das mindestens einen Teil seiner hinteren Seitenkante (21) als Relief aufweist, wobei der Bausatz (10) **dadurch gekennzeichnet ist, dass** er ferner mindestens ein Kupplungselement (1) umfasst, das mindestens einen elastischen U-förmigen Abschnitt (11) aufweist, der geeignet ist, die erhabenen Seitenkantenabschnitte (21, 31) des Anhängers (2) und des Kennzeichenhalterträgers (3) zu umhüllen und zu kuppeln, wenn sie nebeneinander angeordnet sind, wobei das Kupplungselement (1) eine Vielzahl von inneren Zähnen (12) an einer oder beiden inneren Seiten des inneren Kanals (13) bereitstellt, der durch den mindestens einen "U"-förmigen Abschnitt (11) gebildet wird, und mindestens eine flache Klappe (15) umfasst, wobei die mindestens eine flache Klappe (15) mindestens einen Schlitz (16) aufweist und in einer Ebene senkrecht zu den Seiten des "U"-förmigen Abschnitts (11) angeordnet ist, und dass die Lasche (2) mindestens einen Zahn (23) aufweist, der mit dem Abschnitt korrespondiert, der dem mindestens einen Teil seiner hinteren Seitenkante (21) gegenüberliegt, und dass er so geformt ist, dass er sich in den Schlitz (16) des Kupplungselements (1) einfügt.

2. Bausatz (10) nach Anspruch 1, wobei das Kupplungselement (1) zwei elastische "U"-förmige Abschnitte (11) umfasst, die durch einen Hohlraum (14) getrennt sind.

3. Bausatz (10) nach Anspruch 2, wobei die Vielzahl von Innenzähnen (12) auf einer oder beiden Seiten des Hohlraums (14) angeordnet ist.

4. Bausatz (10) nach einem der Ansprüche 1 bis 3, wobei der Anhänger (2) mindestens eine innere Ausbuchtung (22) in Übereinstimmung mit der Innenfläche des mindestens eines Abschnittes seiner hinteren Seitenkante (21) in Relief aufweist.

5. Bausatz (10) nach dem vorhergehenden Anspruch, wobei die mehreren Innenzähne (13) des Kupplungselements (1) so gestaltet sind, dass sie sich im Gebrauch mit der mindestens eine Ausbuchtung (22) des Anhängers (2) verbinden.

6. Bausatz (10) nach einem der Ansprüche 1 bis 5, **dadurch gekennzeichnet, dass** er einen Kennzeichenhalterträger (3) umfasst, bei dem zumindest ein Teil seiner hinteren Seitenkante (31) erhaben ist.

## Revendications

1. Kit (10) pour coupler à un support de porte-plaque d'immatriculation (3) un tag (2), ledit support de porte-plaque d'immatriculation (3) ayant au moins une partie de son bord latéral arrière (31) en relief, ledit kit (10) comprenant un tag (2) comprenant au moins une partie de son bord latéral arrière (21) en relief, ledit kit (10) est **caractérisé en ce qu'**il comprend en outre au moins un élément de couplage (1) ayant au moins une partie élastique en forme de « U » (11) apte à envelopper et à coupler lesdites parties du bord latéral en relief (21, 31) de ladite étiquette (2) et dudit support de porte-plaque d'immatriculation (3), lorsqu'ils sont disposés côte à côte, ledit élément de couplage (1) comporte une pluralité de dents intérieures (12) sur l'un ou les deux côtés intérieurs du canal intérieur (13) formé par ladite au moins une partie en forme de « U » (11) et comprenant au moins un volet plat (15), dans lequel ledit au moins un volet plat (15) comporte au moins une fente (16) et est disposé sur un plan perpendiculaire aux côtés de ladite partie en forme de « U » (11), et **en ce que** ladite étiquette (2) comporte au moins une dent (23) en correspondance avec la partie opposée à ladite partie au moins de son bord latéral arrière (21) en relief et en étant façonnée pour se loger dans ladite fente (16) dudit élément d'accouplement (1).

2. Kit (10) selon la revendication 1, dans lequel ledit élément de couplage (1) comprend deux parties élastiques en forme de « U » (11) séparées par une cavité (14).

3. Kit (10) selon la revendication 2, dans lequel ladite pluralité de dents intérieures (12) est disposée sur l'un ou les deux côtés de ladite cavité (14).

4. Kit (10) selon l'une quelconque des revendications 1 à 3, dans lequel ladite étiquette (2) présente au moins un renflement intérieur (22) en correspondance avec la face intérieure de ladite au moins une partie de son bord latéral arrière (21) en relief.

5. Kit (10) selon la revendication précédente, dans lequel ladite pluralité de dents intérieures (13) dudit élément de couplage (1) est configurée de telle sorte que, pendant l'utilisation, elle s'accouple audit au moins un renflement (22) de ladite étiquette (2).

6. Kit (10) selon l'une quelconque des revendications 1 à 5, dans lequel il comprend un support de porte-plaque d'immatriculation (3) ayant au moins une partie de son bord latéral arrière (31) en relief.
